# EUROPÄISCHE PATENTSCHRIFT

(11) **EP 2 931 487 B1**
(45) Veröffentlichungstag und Bekanntmachung des Hinweises auf die Patenterteilung: **20.02.2019**
(21) Anmeldenummer: 12798779.0
(22) Anmeldetag: 12.12.2012
(51) Int. Cl.: B28B 19/00

(54) **GETAKTETE REGULIERUNG DER GIPSBREIMENGE**
CLOCKED REGULATION OF THE AMOUNT OF PLASTER PASTE
RÉGULATION CADENCÉE DE LA QUANTITÉ DE PÂTE DE PLÂTRE

(43) Veröffentlichungstag der Anmeldung: 21.10.2015
(73) Patentinhaber: Knauf Gips KG, 97346 Iphofen (DE)
(72) Erfinder: HALBACH, Martin, 97464 Niederwerrn (DE); MARTIN, Jürgen, 97355 Kleinlangheim (DE); GREBNER, Gosbert, 97320 Albertshofen (DE); HANAUER, Andreas, 97288 Theilheim (DE)
(74) Vertreter: Zech, Stefan Markus
(86) Internationale Anmeldenummer: PCT/EP2012/075266
(87) Internationale Veröffentlichungsnummer: WO 2014/090300

(56) Entgegenhaltungen:
- US-A- 2 991 824
- US-A- 2 991 826
- US-A- 3 050 104

## Beschreibung

Die Erfindung betrifft eine Gipsplattenherstellungsanlage nach dem Oberbegriff von Patentanspruch 1 sowie ein Verfahren zur Herstellung einer Gipsplatte nach dem Oberbegriff von Patentanspruch 10.

Verfahren zur Herstellung einer Gipsplatte bzw. Gipsplattenherstellungsanlage mit einer Förderbandvorrichtung sind im Stand der Technik bekannt. Eine Hauptfunktion der Förderbandvorrichtung besteht darin, eine auf diese aufgebrachte feuchte Gipslage abbinden zu lassen, so dass die Gipslage durch Unterteilen zu Gipsplatten weiterverarbeitet werden kann. Derartige Gipsplatten können dann an einer Baustelle beispielsweise an die Wand oder die Decke montiert werden.

Weiterhin ist es bekannt, mittels eines derartigen Verfahrens bzw. mittels einer derartigen Gipsplattenherstellungsanlage Gipsplatten herzustellen, die an ihren vier Kanten eine Abschrägung aufweisen, um eine einfache Verspachtelung oder Überdeckung der Fugen beim Aneinanderlegen mehrerer Gipsplatten zu ermöglichen. Diesbezüglich wird beispielsweise auf die EP 1 499 482 B1, die US 2001/0044016, die EP 0 482 810 oder die WO2012/155950 verwiesen.

Die Druckschrift US 2 991 826 A1 offenbart eine Gipsplattenherstellungsanlage gemäß dem Oberbegriff des Anspruchs 1 und ein Verfahren zur Herstellung einer Gipsplatte gemäß dem Oberbegriff des Anspruchs 10.

Die in diesen genannten Schriften gezeigten Verfahren und Vorrichtungen zur Einbringung von Einformungen bzw. zur Einbringung von Einprägungen werden in die vorliegende Anmeldung durch Bezugnahme aufgenommen.

Es hat sich aber gezeigt, dass bei der Einbringung von Einformungen bzw.

Einprägungen in eine Gipslage trotz Vorsehen eines Gegenhalteelements auf der abgewandten Seite der Gipslage eine leichte Aufwölbung mit einer Höhe von wenigen 1/10 mm oder darunter auftreten kann. Obwohl dies die einzelne Gipsplatte nicht in ihrer Funktion oder Belastbarkeit beeinträchtigt, kann sich bei Übereinanderstapelung entsprechend ausgebildeter Gipsplatten ein sichtbarer Effekt und auch eine Durchbiegung der oberen Platten im Plattenstapel ergeben, da sich die randseitig ggf. vorhandenen Aufwölbungen im Stapel aufaddieren.

Die Aufgabe der vorliegenden Erfindung besteht darin, ein Verfahren zur Herstellung einer Gipsplatte bzw. eine Gipsplattenherstellungsanlage anzugeben, bei dem bzw. bei der den Effekten, die durch eine gewollte Materialverdrängung im Bereich der sich aushärtenden Gipslage entstehen können, wirksam begegnet wird.

Diese Aufgabe wird in verfahrenstechnischer Hinsicht mit einem Vorgehen nach den Merkmalen des Anspruchs 10 und in vorrichtungstechnischer Hinsicht mit einer Gipsplattenherstellungsanlage nach den Merkmalen des Anspruchs 1 gelöst. Vorteilhafte Weiterbildungen sind in den Unteransprüchen angegeben.

Eine Kernüberlegung der vorliegenden Erfindung besteht darin, die bei einer gewünschten Einwirkung auf die sich aushärtende Gipslage auftretenden Materialverdrängungen bereits zuvor bei Aufbringung der Gipsslurry zu berücksichtigen. Die Erfindung geht in einer möglichen Ausgestaltung insoweit von der Überlegung aus, dass diejenigen Stellen der Gipslage, an denen später Einformungen oder Einprägungen vorgenommen werden sollen und somit eine Materialverdrängung auftritt, schon von vornherein nur mit einer reduzierten Menge von Gipsslurry belegt werden. Insofern ist in verfahrenstechnischer Hinsicht vorgesehen, dass die Menge V(t) der zwischen erster Ummantelung und zweiter Ummantelung eingebrachten Gipsslurry in einer vorgegebenen Taktfrequenz f über eine vorgegebene Zeitspanne t_{Δ} gegenüber einer Vorgabemenge reduziert wird.

In einer bevorzugten Ausgestaltung, in der über die Einformungen bzw. Einprägungen eine Kantenabschrägung erzielt werden soll, ist zu berücksichtigen, dass die Längenausdehnung der Einformungen bzw. Einprägungen in Bezug auf die Länge der zu konfektionierenden Gipsplatte relativ gering ist. Insofern ist in einer speziellen Ausgestaltung des Verfahrens vorgesehen, dass die Zeitspanne t_{Δ} des Mengereduzierens weniger als 20 %, insbesondere zwischen 10 % und 5 % der durch die Taktfrequenz f vorgegebenen Periode beträgt. Diese Werte sind für alle relevanten Bandgeschwindigkeiten überprüft und einschlägig.

In einer bevorzugten Ausgestaltung werden somit in die Gipslage vor Aushärtung oder nach bereits begonnener Aushärtung quer zur Transportrichtung ausgebildeten Einformungen oder Einprägungen in einem vorgegebenen Abstand a eingebracht, wobei die Taktfrequenz f so vorgegeben oder eingestellt wird, dass die Mengenreduzierung der ausgebrachten Gipsslurry an die Stellen an der Gipslage gegeben ist, an denen nachfolgend die Einformungen bzw. Einprägungen vorgenommen werden.

In einer konkreten Ausgestaltung entspricht der Abstand a, in dem die Einformungen bzw. Einprägungen eingebracht werden, der Länge der später durch Schneiden quer zur Transportrichtung entstehenden Gipsplatten plus einem Schneid- und Nachbehandlungsverlust an den Stirnkanten d. Insbesondere wird die Gipslage später im Bereich der Einformungen oder Einprägungen zum Konfektionieren von Gipsplatten mit Länge l geschnitten (a=l+d).

Es sind theoretisch verschiedene Alternativen denkbar, um zu gewährleisten, dass die Einformungen bzw. Einprägungen genau an den Stellen vorgenommen werden, an denen zuvor eine Reduzierung der Menge der Gipsslurry bewirkt worden ist. In einer ersten Alternative könnte der Takt bzw. die Frequenz, in der jeweils neue Einformungen bzw. Einprägungen an der Gipslage vorgenommen werden, auf einen fixen Wert eingestellt werden. Die Frequenz f, mit der die Menge der Gipsslurry reduziert wird, sowie die Phase dieses Vorgangs könnte dann unabhängig auf den exakt gleichen Frequenzwert mit der jeweils geeigneten Phasenausrichtung eingestellt werden. Es ist aber damit zu rechnen, dass, wenn die Einbringung der Einformungen oder Einprägungen nicht mit der Gipsmengenreduzierung synchronisiert wird, beide Vorgänge nach längerem Betrieb des Verfahrens bzw. der Gipsplattenherstellungsanlage außer Phase geraten. Insofern wird eine Synchronisierung zwischen beiden Vorgängen, nämlich dem Einbringen von Einformungen oder Einprägungen einerseits und der zeitlich vorgelagerten Gipsslurrymengenreduzierung andererseits als bevorzugte Ausgestaltung angesehen.

Eine derartige Synchronisierung kann durch mechanische Einrichtungen, wie beispielsweise ein Getriebe, oder steuerungstechnisch, insbesondere elektronisch, realisiert sein.

Das erfindungsgemäße Verfahren lässt sich in einer ersten Ausgestaltung anwenden, bei der Einbringung von Einformungen über Formstege, die über eine vorgegebene Abbindezeit mit der Gipslage auf der Förderbandvorrichtung umlaufen, also dann, wenn das Verfahren mit einer Einformung in die noch nicht ausgehärtete Gipslage kombiniert wird.

In einer anderen Ausgestaltung kann das Verfahren aber auch angewandt werden, wenn in die Gipslage, die bereits teilweise ausgehärtet ist, Einprägungen eingebracht werden sollen. Einprägungen können beispielsweise über eine Prägerolle, einen fahrbaren Prägestempel oder ähnliche Einrichtungen eingebracht werden. Hinsichtlich der verschiedenen Alternativen zur Einbringung von Einprägungen wird auf die EP 0 482 810 verwiesen.

Die erfindungsgemäße Gipsplattenherstellungsanlage umfasst eine Dosiereinrichtung, die dazu ausgebildet und eingerichtet ist, die Menge V(t) der zwischen erster Ummantelung und zweiter Ummantelung eingebrachten Gipsslurry in einer vorgegebenen Taktfrequenz f über eine vorgegebene Zeitspanne t_{Δ} gegenüber einer Vorgabemenge V_{V} zu reduzieren.

In einer bevorzugten Ausgestaltung kann die Dosiereinrichtung mit einer Steuereinrichtung zusammenwirken, die die Taktfrequenz vorgibt und ggf. nachjustiert. Eine derartige Steuereinrichtung kann eine eigens der Dosiereinrichtung zugeordnete Steuereinrichtung oder auch eine übergeordnete, insbesondere zentrale Steuereinrichtung sein. Die der Dosiereinrichtung zugeordnete Steuereinrichtung oder auch die übergeordnete Steuereinrichtung bewirkt in einer bevorzugten Ausgestaltung, dass eine Synchronisation mit einem weiteren Prozess, der an der Gipsplattenherstellungsanlage vorgenommen wird, wie beispielsweise einem Einformen oder einem Einprägen von Formstegen, eingehalten wird.

Erfindungsgemäß ist die Dosiereinrichtung im Bereich eines Formtisches, insbesondere innerhalb des Formtisches integriert, angeordnet, an dem unter Zusammenführung von erster Ummantelung, Gipsslurry und zweiter Ummantelung die Gipslage ausgebildet und geformt wird.

Erfindungsgemäß umfasst die Dosiereinrichtung ein quer zur Transportrichtung der Förderbandvorrichtung ausgerichtetes Stauschwert, das in einer zur Transportrichtung und zur Längsausrichtung des Stauschwerts orthogonalen Richtung in Richtung auf die Gipsschicht mit einem vorgegebenen Hub h verfahrbar ausgebildet ist. Dabei kann das Stauschwert mit einem vorgegebenen Hub h von oben auf die Gipslage einwirken und durch Herabsenken über eine vorgegebene Zeitdauer eine Reduzierung der Menge der Gipsschicht in der Gipslage bewirken.

Es ist aber auch möglich, dass das Stauschwert mit vorgegebenem Hub h von unten auf die Gipslage einwirkt und durch Anheben über eine vorgegebene Zeitdauer eine Reduzierung der Menge der Gipsschicht in der Gipslage bewirkt. In beiden vordiskutierten Ausgestaltungen kann der Hub des Stauschwerts auf einen Maximalhub eingestellt sein, der auf einen Wert im Bereich von 0,5 mm bis 5 mm, vorzugweise 1 bis 3 mm, festgelegt ist.

In einer anderen möglichen Ausführungsform umfasst die Dosiereinrichtung eine quer zur Transportrichtung der Förderbandvorrichtung ausgerichtete Staurolle, die in einer zur Transportrichtung und zur Längsrichtung der Transportrolle orthogonalen Richtung in Richtung auf die Gipsschicht mit einem vorgegebenen Hub h verfahrbar ausgebildet ist. Dabei kann die Staurolle mit einem vorgegebenen Hub h von oben auf die Gipslage einwirken und durch Herabsenken über eine vorgegebene Zeitdauer eine Reduzierung der Menge der Gipsschicht in der Gipslage bewirken. Es ist aber auch möglich, dass die Staurolle mit vorgegebenem Hub h von unten auf die Gipslage einwirkt und durch Anheben über eine vorgegebene Zeitdauer einer Reduzierung der Menge der Gipsschicht in der Gipslage bewirkt. In beiden vordiskutierten Ausgestaltungen kann der Hub der Staurolle auf einen Maximalhub eingestellt sein, der auf einen Wert im Bereich von 0,5 mm bis 5 mm, vorzugsweise 1 bis 3 mm, festgelegt ist.

Es ist alternativ auch denkbar, die Dosiereinrichtung im Bereich der Gipszuführung, also in Zuführrichtung der Gipsslurry vor einem Formtisch, an dem die Gipslage unter Zusammenführung von erster Ummantelung, Gipsslurry und zweiter Ummantelung ausgebildet und geformt wird, anzuordnen.

Die erfindungsgemäße Gipsplattenherstellungsanlage kann eine Einformungseinrichtung aufweisen, die auf die Gipslage in Transportrichtung der Förderbandvorrichtung stromab der Dosiereinrichtung auf die Gipslage einwirkt und quer zur Transportrichtung der Förderbandvorrichtung ausgerichtete Einformungen im Bereich der Stellen erzeugt, an denen die Dosiereinrichtung eine Mengenreduzierung der Gipsslurry bewirkt hat.

In einer anderen möglichen Ausgestaltung kann die Gipsplattenherstellungsanlage auch eine Prägeeinrichtung umfassen, die auf die Gipslage in Transportrichtung der Förderbandvorrichtung stromab der Dosiereinrichtung einwirkt und Einprägungen im Bereich der Stellen erzeugt, an denen die Dosiereinrichtung eine Mengenreduzierung der Gipsslurry bewirkt hat.

In einer insgesamt bevorzugten Ausgestaltung wird die Frequenz der Einformungen bzw. der Einprägungen über eine zentrale Steuerung und/oder über Sensoren mit der Steuereinrichtung der Dosiereinrichtung synchronisiert.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen
- Figur 1: eine erste Ausführungsform einer Gipsplattenherstellungsanlage nach der vorliegenden Erfindung in Prinzipansicht.
- Figur 2: eine zweite Ausführungsform einer Gipsplattenherstellungsanlage nach der vorliegenden Erfindung in Prinzipansicht.
- Figur 3: eine dritte Ausführungsform einer Gipsplattenherstellungsanlage nach der vorliegenden Erfindung in Prinzipansicht.
- Figur 4a: eine erste Variante für eine Dosiereinrichtung (in Prinzipansicht).
- Figur 4b: eine zweite Variante für eine Dosiereinrichtung (in Prinzipansicht).

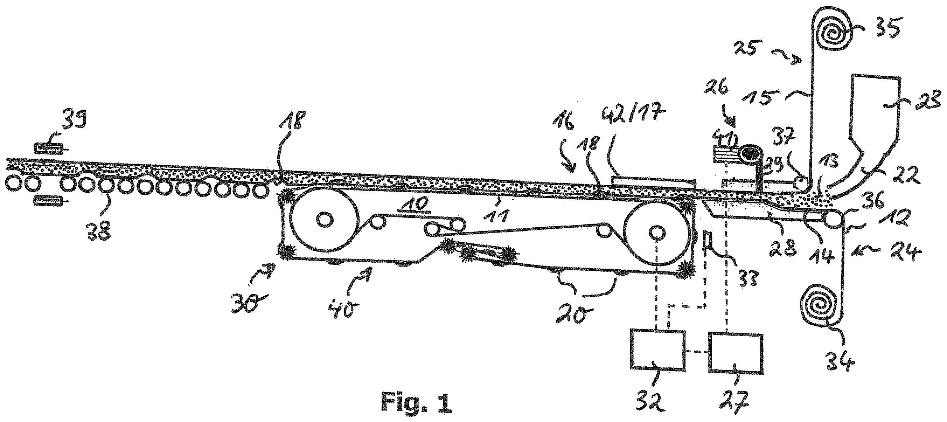

In Figur 1 ist eine erste Ausführungsform einer Gipsplattenherstellungsanlage nach der vorliegenden Erfindung in Prinzipansicht dargestellt. Die Gipsplattenherstellungsanlage umfasst zunächst einen Formtisch 28. An diesem Formtisch 28 wird eine erste Ummantelung 12 über eine erste Zuführung 24, die ein oder mehrere erste Umlenkrollen 36 umfassen kann, von einer ersten Rolle 34 zugeführt. Auf diese erste Ummantelung 12 wird eine Gipsslurry 13 zugeführt. Die Gipsslurry 13 wird in einem Mischer 23 angemischt und über eine Gipszuführung 22 auf die erste Ummantelung 12 aufgebracht. Über eine zweite Zuführung 25 umfassend eine zweite Umlenkrolle 37 wird eine zweite Ummantelung 15 dem Formtisch 28 von einer zweiten Rolle 35 zugeführt und dort auf die Gipsslurry 13 aufgelegt. Die erste Ummantelung 12, die Gipsslurry 13, die sich zu einer Gipsschicht 14 im Formtisch 28 ausbildet, sowie die zweite Ummantelung 15 werden als eine mit fortschreitender Zeit bzw. fortschreitender Wegstrecke aushärtende Gipslage 16 über eine Förderbandvorrichtung 10 fortgeführt. Die Förderbandvorrichtung 10 umfasst zunächst ein Tragband 11 und an das Tragband 11 anschließend einen Rollenförderer 38. Im Bereich des Rollenförderers 38 ist noch eine Schneideinrichtung 39 angeordnet, um die bereits im Wesentlichen ausgehärtete Gipslage 16 in Gipsplatten vorbestimmter Länge zu konfektionieren.

Zwischen Tragband 11 und erster Ummantelung 12 der Gipslage 16 ist bei der vorliegenden Ausführungsform noch eine Einformungseinrichtung 30 wirksam. Die Einformungseinrichtung 30 weist bei der vorliegenden Ausführungsform ein umlaufendes Formstegeband 40 auf, das quer zu seiner Bewegungsrichtung in einem vorgegebenen konstanten Abstand mit Formstegen 20 belegt ist. Über die Formstege 20 läuft das Formstegeband 40 auf dem Tragband 11 mit gleicher Geschwindigkeit mit. Durch die quer zur Transportrichtung der Förderbandvorrichtung 10 verlaufenden Formstege 20 werden im äquidistanten Abstand in die noch nicht ausgehärtete Gipslage 16 Einformungen 18 eingeformt. Auf der den Formstegen 20 gegenüberliegenden Seite der Gipslage 16 sind ein oder mehrere Gegenhalteelemente 42 vorgesehen, das eine Materialverlagerung nach oben verhindert. Das/Die Gegenhalteelemente 42 dienen bei der vorliegenden Ausführungsform gleichzeitig als Glättbalken der im Formtisch 28 ausgebildeten Gipslage 16.

Dadurch, dass das umlaufende Formstegeband 40 mit dem Tragband 11 über einen gewissen Zeitraum mitläuft, kann die Gipslage 16 bereits teilweise abbinden, so dass die Einformungen 18 formstabil sind, wenn die Gipslage 16 dem Rollenförderer 38 übergeben wird. Die Schneideinrichtung 39 schneidet die Gipslage 16 an denjenigen Stellen, an denen die Einformungen 18 eingeformt sind. Hinsichtlich dieser oder alternativer möglicher Ausgestaltungen des umlaufenden Formstegebands 40 wird auf die WO2012/155950 verwiesen.

Innerhalb des Formtisches 28 ist eine Dosiereinrichtung 26, die hier ein Stauschwert 29 umfasst, integriert. Das Stauschwert 29 taucht von oben her in den Formtisch 28 ein und ist über einen vorgegebenen Hub von etwa 0,5 bis 5 mm, vorzugsweise 1 bis 3 mm, in vertikaler Richtung bzw. in einer Richtung im Wesentlichen entsprechend zur Flächennormalen der sich ausbildenden Gipslage 16 bewegbar. Zu diesem Zweck weist die Dosiereinrichtung 26 einen Antrieb 41 sowie eine Steuereinrichtung 27 auf, um das Stauschwert 29 mit dem vorgegebenen Hub zu bewegen, und zwar von einer Ruheposition, in der eine untere Kante des Stauschwerts 29 an der zweiten Ummantelung 15 von oben her anliegt bzw. oberhalb der zweiten Ummantelung 15 steht. In einer Arbeitsposition wird das Stauschwert 29 so in Richtung auf die Gipslage 16 hin verfahren, so dass die untere Kante des Stauschwerts 29 in die Gipslage 16 unter Verformung der zweiten Ummantelung 15 eintaucht. Hierdurch wird eine vorbestimmte Menge Gipsslurry 13 verdrängt, wodurch die Gipslage 16 zu den Zeiten, in denen das Stauschwert 29 sich in Arbeitsposition befindet, mit weniger Gipsslurry 13 befüllt wird, als zu den Zeiten, in denen sich das Stauschwert 29 in Ruheposition befindet.

Obwohl die Gipsplattenherstellungsanlage Gegenhalteelemente 42 in dem Bereich, in dem die Formstege 20 in die Gipslage 16 eintauchen, umfasst, bleibt das Eintauchen der Formstege 20 in die Gipslage 16 mit einer Materialverdrängung bzw. - verlagerung innerhalb der Gipsslurry verbunden. Um das Mindervolumen in der aushärtenden Gipslage 16 durch das Einformen der Formstege 20 vorwegzunehmen, wird Hub und Arbeitszeit des Stauschwerts 29 so eingestellt, dass die Minderbefüllung der Gipslage 16 mit Gipsslurry an den Stellen, in denen später die Formstege 20 eintauchen, in etwa in dem Volumen erfolgt, das dem durch die Formstege 20 verdrängten Volumen entspricht.

Während es insoweit möglich wäre, Phase und Takt der Dosiereinrichtung 26 mittels der Steuereinrichtung 27 unabhängig auf die Frequenz einzustellen, mit denen die Formstege 20 im Bereich der Gegenhalteelemente 42 in die Gipslage 16 eintauchen, so wird es doch bevorzugt, wenn die Bewegung des umlaufenden Formstegebands 40 mit der Dosiereinrichtung 26, konkret also mit dem Antrieb 41 der Dosiereinrichtung 26 synchronisiert wird.

Eine solche Synchronisierung kann auf mechanischem Weg erfolgen; in der vorliegenden Ausführungsform ist eine steuerungstechnische Synchronisierung vorgesehen. Eine zentrale Steuerung 32 steuert bzw. regelt die Geschwindigkeit des umlaufenden Formstegebands 40, die insgesamt der Geschwindigkeit der Gipslage 16 innerhalb der Förderbandvorrichtung 10 entspricht. Die Phase und Umlaufgeschwindigkeit der Formstege kann durch die zentrale Steuerung 32 vorgegeben und/oder zusätzlich durch geeignete Sensoren 33 im Bereich des umlaufenden Formstegebands 40 zusätzlich erfasst werden. Diese Ist-Information über die Geschwindigkeit bzw. Frequenz der Formstege und deren Phasenlage wird über die zentrale Steuerung 32 an die Steuereinrichtung 27 der Dosiereinrichtung 26 weitergegeben, so dass Phase und Frequenz der Dosiereinrichtung 26 exakt auf die Phase und Frequenz der sich in die Gipslage 16 einformenden Formstege 20 abgestimmt werden kann.

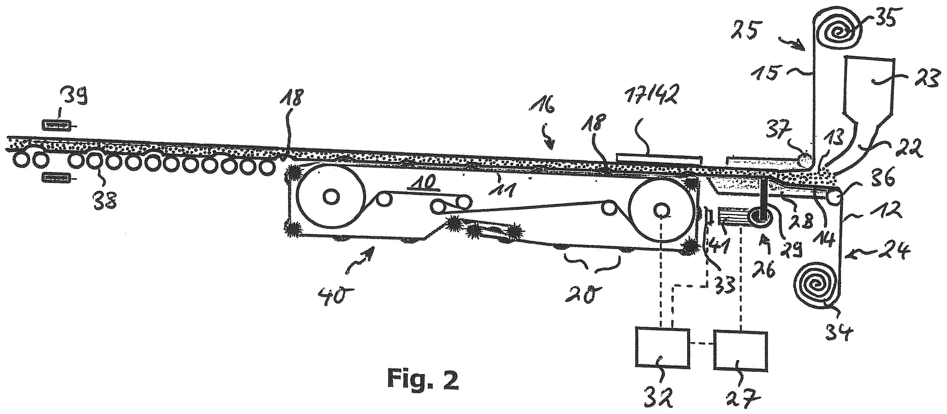

In Figur 2 ist eine alternative Ausführungsform dargestellt. Zur Vermeidung von Wiederholungen wird lediglich auf die abweichende Anordnung der Dosiereinrichtung 26 Bezug genommen. Während bei der Ausführungsform nach Figur 1 das Stauschwert 29 der Dosiereinrichtung von oben her in den Formtisch 28 eintaucht, ist bei der Ausführungsform nach Figur 2 ein Eintauchen des Stauschwerts 29 von unten her in den Formtisch 28 vorgesehen. Insofern ist auch bei der Ausführungsform nach Figur 2 die Dosiereinrichtung mit einem Antrieb 41 sowie einer Steuereinrichtung 27, die in Abhängigkeit einer zentralen Steuerung 32 arbeitet, vorgesehen. Die Dosiereinrichtung 26 wird in gleicher Weise mit dem umlaufenden Formstegeband 40 synchronisiert, wie dies anhand der Ausführungsform nach Figur 1 beschrieben wurde.

Das Stauschwert 29 befindet sich bei der Ausführungsform nach Figur 2 in Ruheposition, wenn es von unten her an der ersten Ummantelung 12 anliegt bzw. mit einer oberen Kante unterhalb der ersten Ummantelung 12 angeordnet ist. In einer Arbeitsposition wird das Stauschwert über den Antrieb 41 in Richtung auf die Gipslage 16 (nach oben) verfahren und drückt sich mit einer Tiefe von ca. 0,5 - 5 mm, vorzugsweise 1 - 3 mm, in die Gipslage 16 unter Verformung der ersten Ummantelung 12 ein. Durch diese Annäherung zwischen erster Ummantelung 12 und zweiter Ummantelung 15 wird die Gipslage 16 mit weniger Gipsslurry 13 verfüllt. Diese Minderbefüllung wird nur über einen vergleichsweise kurzen Zeitraum, einem Zeitraum in der Größenordnung, die der Breite eines Formstegs dividiert durch die Transportgeschwindigkeit der Förderbandvorrichtung 10 entspricht, aufrechterhalten.

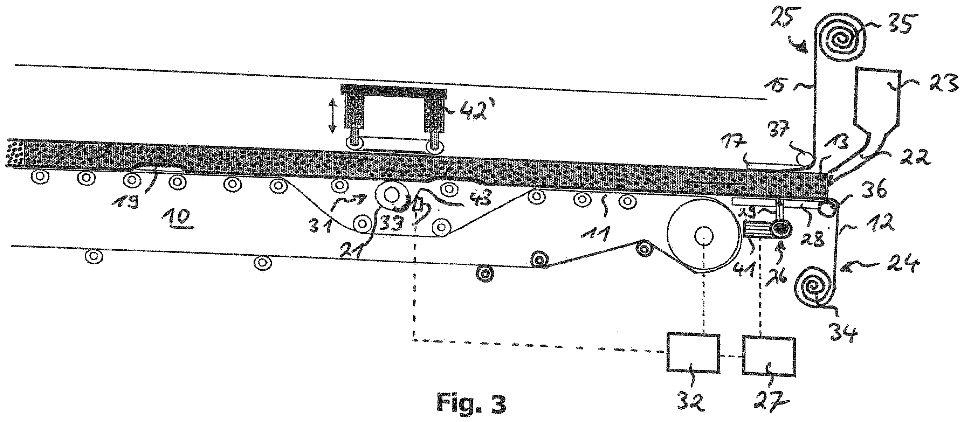

In Figur 3 ist eine alternative Ausführungsform dargestellt, die sich von der Ausführungsform nach Figur 2 im Wesentlichen dadurch unterscheidet, dass nicht über Formstege 20 Einformungen 18 in die sich aushärtende Gipslage 16 eingeformt werden, sondern nach Abwarten einer vorbestimmten Abbindezeit durch eine Prägeeinrichtung 31 Einprägungen 19 in die bereits zumindest teilweise ausgehärtete Gipslage 16 eingeprägt werden. Die Prägeeinrichtung 31 kann beispielsweise eine Prägerolle 21 umfassen, die eine Prägeerhöhung 43 mit vorbestimmter Kontur aufweist. Die Kontur der Prägeerhöhung 43 kann beispielsweise so gewählt werden, dass sich eine in etwa trapezförmige Einprägung 19 in der Gipslage 16 ergibt.

Um die bei der Einprägung der Prägeerhöhung 43 auftretenden Kräfte auf die Gipslage 16 abzufangen, kann ein Gegenhalteelement 42' auf der der Prägerolle 21 gegenüberliegenden Seite der Gipslage 16 vorgesehen sein. Die Gegenhalteeinrichtung 42' ist bevorzugterweise in einer Richtung parallel zur Flächennormalen der Gipslage 16 bzw. in vertikaler Richtung verstellbar ausgerichtet.

Auch bei der Ausführungsform nach Figur 3 ist eine Dosiereinrichtung 26 innerhalb des Formtisches 28 vorgesehen, die ebenfalls ein Stauschwert 29 umfasst. Aufbau und Funktionsweise der Dosiereinrichtung 26 mit Stauschwert 29 und Steuereinrichtung 27 sind entsprechend der Ausführungsform nach Figur 2 ausgebildet. Die Synchronisation erfolgt auch hier auf gleicher Weise, d.h. die Dosiereinrichtung 26 wird in Synchronisation mit der Prägeeinrichtung 31 betrieben. Zu diesem Zweck steuert bzw. regelt eine zentrale Steuerung 32 die Prägeeinrichtung 31 und gleichzeitig die Geschwindigkeit des Tragbands 11. Zusätzlich kann die Einbringung von Einprägungen 19 durch die Prägeeinrichtung 31 mittels Sensoren 33 überwacht werden. Aufgrund dieser Ist-Information über die Funktionsstellung der Prägeeinrichtung 31 bzw. der Geschwindigkeit des Tragbands 11 wird über die zentrale Steuerung 32 und die Steuereinrichtung 27 der Dosiereinrichtung 26 eine auf die Frequenz der Einprägungen 19 abgestimmte Minderbefüllung der Gipslage 16 eingestellt. Hierdurch wird also gewährleistet, dass dort, wo Einprägungen 19 vorgenommen werden, die Gipslage 16 bereits mit einer Mindermenge an Gipsslurry 13 befüllt ist. Insofern wird es als vorteilhaft angesehen, wenn sowohl das Stauschwert 29 der Dosiereinrichtung 26 als auch die Prägeeinrichtung 31 von der ersten Ummantelung 12 her auf die Gipslage 16 einwirken.

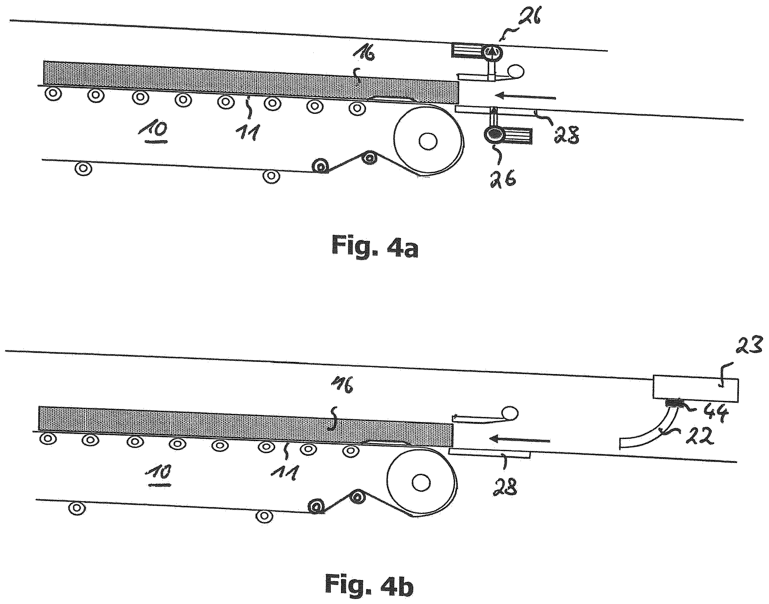

In den Figuren 4a und 4b sind noch zwei Varianten für eine Dosiereinrichtung 26 in Prinzipansicht gegenübergestellt. Bei der Dosiereinrichtung 26 nach der Figur 4a wird ein von oben und/oder von unten wirksames Stauschwert 29 in den Formtisch 28 integriert angeordnet. Bei der Ausführungsform nach der Figur 4b erfolgt eine Taktung der eingebrachten Menge an Gipsslurry 13 bzw. eine getaktete Minderbefüllung der Gipslage 16 mit Gipsslurry 13 bereits im Bereich der Gipszuführung 22. Zu diesem Zwecke kann an einem Auslass eines Mischers 23 oder im Bereich der Gipszuführung 22 ein Ventil 44 angeordnet sein, das eine getaktete Reduzierung der zugeführten Gipsslurry gestattet.

Obwohl die getaktete Dosierung der zugeführten Gipsslurry vorstehend stets in Verbindung mit der Einbringung von quer zur Transportrichtung verlaufenden Einformungen bzw. Einprägungen beschrieben wurde, ist es denkbar, die getaktete Zuführung bzw. getaktete Variation der zugeführten Menge an Gipsslurry auch in anderen Applikationen umzusetzen. Auch ist die Art der Einbringung von Einformungen bzw. Einprägungen keineswegs auf die vorstehend konkret geschilderten Methoden beschränkt. Vielmehr sind, wie eingangs schon erwähnt, aus dem Stand der Technik zahlreiche Varianten bekannt, die das Einbringen von Einformungen bzw. das Einbringen von Einprägungen ermöglichen.

### Bezugszeichenliste

- 10: Förderbandvorrichtung
- 11: Tragband
- 12: erste Ummantelung
- 13: Gipsslurry
- 14: Gipsschicht
- 15: zweite Ummantelung
- 16: Gipslage
- 17: Glättbalken
- 18: Einformungen
- 19: Einprägungen

- 20: Formstege
- 21: Prägerolle
- 22: Gipszuführung
- 23: Mischer
- 24: erste Zuführung
- 25: zweite Zuführung
- 26: Dosiereinrichtung
- 27: Steuereinrichtung
- 28: Formtisch
- 29: Stauschwert
- 30: Einformungseinrichtung
- 31: Prägeeinrichtung
- 32: zentrale Steuerung
- 33: Sensoren
- 34: erste Rolle
- 35: zweite Rolle
- 36: erste Umlenkrolle
- 37: zweite Umlenkrolle
- 38: Rollenförderer
- 39: Schneideinrichtung

- 40: umlaufendes Formstegeband
- 41: Antrieb
- 42, 42': Gegenhalteelement
- 43: Prägeerhöhung
- 44: Ventil

## Patentansprüche

1. Gipsplattenherstellungsanlage, umfassend
- eine Förderbandvorrichtung (10) mit einem Tragband (11),
- eine erste Zuführung (24) für eine erste Ummantelung (12) derart, dass die erste Ummantelung (12) auf das Tragband (11) geführt wird,
- eine Gipszuführung (22), die eine Gipsslurry (13) aus einem Mischer (23) auf die erste Ummantelung (12) zuführt, um so eine Gipsschicht (14) auf der ersten Ummantelung (12) auszubilden,
- eine zweite Zuführung (25) für eine zweite Ummantelung (15) derart, dass die zweite Ummantelung (15) auf die Gipsschicht (14) aufgebracht und eine erste Ummantelung (12), Gipsschicht (14) und zweite Ummantelung (15) umfassende Gipslage (16) ausgebildet wird,
- eine Glättvorrichtung, wie beispielsweise ein Glättbalken (17) oder eine Glättrolle, um die Gipslage (16) zu glätten, sowie
- eine Dosiereinrichtung (26), die dazu ausgebildet und eingerichtet ist, die Menge V(t) der zwischen erster Ummantelung (12) und zweiter Ummantelung (15) eingebrachten Gipsslurry (13) in einer vorgegebenen Taktfrequenz f über eine vorgegebene Zeitspanne t_{Δ} gegenüber einer Vorgabemenge V_{V} zu reduzieren,
wobei die Dosiereinrichtung im Bereich eines Formtisches (28), insbesondere innerhalb des Formtisches (28) integriert, angeordnet ist, an dem unter Zusammenführung von erster Ummantelung (12), Gipsslurry (13) und zweiter Ummantelung (15) die Gipslage (16) ausgebildet und geformt wird,
**dadurch gekennzeichnet, dass**
die Dosiereinrichtung (26) ein quer zur Transportrichtung der Förderbandvorrichtung (10) ausgerichtetes Stauschwert (29) oder Staurolle umfasst, das bzw. die in einer zur Transportrichtung und zur Längsausrichtung des Stauschwerts (29) bzw. der Staurolle orthogonalen Richtung in Richtung auf die Gipsschicht (14) mit einem vorgegebenen Hub h verfahrbar ausgebildet ist.

2. Gipsplattenherstellungsanlage nach Anspruch 1, **dadurch gekennzeichnet, dass** die Dosiereinrichtung (26) mit einer Steuereinrichtung (27) zusammenwirkt, die die Taktfrequenz f vorgibt und ggf. nachjustiert.

3. Gipsplattenherstellungsanlage nach Anspruch 1 oder 2, **dadurch gekennzeichnet, dass** das Stauschwert (29) oder die Staurolle mit jeweils vorgegebenem Hub h von oben auf die Gipslage einwirkt und durch Herabsenken über eine vorgegebene Zeitdauer eine Reduzierung der Menge der Gipsschicht (14) in der Gipslage (16) bewirkt.

4. Gipsplattenherstellungsanlage nach Anspruch 1 oder 2, **dadurch gekennzeichnet, dass** das Stauschwert (29) oder die Staurolle mit jeweils vorgegebenem Hub h von unten auf die Gipslage einwirkt und durch Anheben über eine vorgegebene Zeitdauer eine Reduzierung der Menge der Gipsschicht (14) in der Gipslage (16) bewirkt.

5. Gipsplattenherstellungsanlage nach einem der Ansprüche 1 bis 4, **dadurch gekennzeichnet, dass** der Hub h des Stauschwerts bzw. die Staurolle auf einen Maximalhub eingestellt ist, der auf einen Wert im Bereich von 0,5 mm bis 5 mm, vorzugsweise 1 bis 3 mm, festgelegt ist.

6. Gipsplattenherstellungsanlage nach einem der Ansprüche 1 bis 5, **dadurch gekennzeichnet, dass** eine Einformungseinrichtung (30) vorgesehen ist, die auf die Gipslage (16) in Transportrichtung der Förderbandvorrichtung (10) stromab der Dosiereinrichtung (26) einwirkt und quer zur Transportrichtung der Förderbandvorrichtung ausgerichtete Einformungen (18) im Bereich der Stellen erzeugt, an denen die Dosiereinrichtung eine Mengenreduzierung der Gipsslurry (13) bewirkt hat.

7. Gipsplattenherstellungsanlage nach einem der Ansprüche 1 bis 6, **dadurch gekennzeichnet, dass** eine Prägeeinrichtung (31) vorgesehen ist, die auch die Gipslage (16) in Transportrichtung der Förderbandvorrichtung (10) beabstandet zur Dosiereinrichtung (26) auf die Gipslage (16) einwirkt und Einprägungen (19) im Bereich der Stellen erzeugt, an denen die Dosiereinrichtung eine Mengenreduzierung der Gipsslurry (13) bewirkt hat.

8. Gipsplattenherstellungsanlage nach Anspruch 7, **dadurch gekennzeichnet, dass** die Prägeeinrichtung (31) eine Prägerolle oder einen verfahrbaren Prägestempel umfasst.

9. Gipsplattenherstellungsanlage nach einem der Ansprüche 6 bis 8, **dadurch gekennzeichnet, dass** die Frequenz der Einformungen (18) bzw. der Einprägungen (19) über eine zentrale Steuerung (32) und/oder über Sensoren (33) mit der Steuereinrichtung (27) der Dosiereinrichtung (26) synchronisiert ist.

10. Verfahren zur Herstellung einer Gipsplatte mit den Schritten:
- Bereitstellen einer Förderbandvorrichtung (10) mit einem Tragband (11),
- Aufbringen einer ersten Ummantelung (12) auf das Tragband (11),
- Aufbringen einer Gipsslurry (13) auf die erste Ummantelung (12) unter Ausbildung einer Gipsschicht (14) sowie
- Aufbringen einer zweiten Ummantelung (15) auf die aufgebrachte Gipsslurry (13) zur Ausbildung einer erste Ummantelung (12), Gipsschicht (14) und zweite Ummantelung (15) umfassenden Gipslage (16),
- Glätten der Gipslage (16) mit einem Glättbalken (17) oder einer Glättrolle, **dadurch gekennzeichnet, dass** die Menge V(t) der zwischen erster Ummantelung (12) und zweiter Ummantelung (15) eingebrachten Gipsslurry (13) in einer vorgegebenen Taktfrequenz f über eine vorgegebene Zeitspanne t_{Δ} gegenüber einer Vorgabemenge V_{V} reduziert wird, wobei die Reduzierung der eingebrachten Gipsslurry über eine Aufstauung der zwischen erster Ummantelung (12) und zweiter Ummantelung (15) eingebrachten Gipsslurry mittels eines Stauschwertes oder einer Staurolle unter Verfahrung des Stauschwertes oder der Staurolle in einer zur Transportrichtung und zur Längsausrichtung des Stauschwertes bzw. der Staurolle orthogonalen Richtung in Richtung auf die Gipsschicht (14) mit einem vorgegebenen Hub (h) erfolgt.

11. Verfahren nach Anspruch 10, **dadurch gekennzeichnet, dass** die Zeitspanne t_{Δ} des Mengereduzierens weniger als 20 %, insbesondere zwischen 10 % und ca. 5 % der durch die Taktfrequenz f vorgegebenen Periode beträgt.

12. Verfahren zur Herstellung einer Gipsplatte nach Anspruch 10 oder 11, **dadurch gekennzeichnet, dass** in die Gipslage (16) vor Aushärtung oder nach bereits begonnener Aushärtung quer zur Transportrichtung ausgebildete Einformungen (18) oder Einprägungen (19) in einem vorgegebenen Abstand a eingebracht werden, wobei die Taktfrequenz f so vorgegeben oder eingestellt wird, dass die Mengenreduzierung der ausgebrachten Gipsslurry an den Stellen in der Gipslage (16) gegeben ist, an denen nachfolgend die Einformungen (18) bzw. Einprägungen (19) vorgenommen werden.

13. Verfahren nach Anspruch 12, **dadurch gekennzeichnet, dass** der vorgegebene Abstand a, in dem die Einformungen (18) bzw. Einprägungen (19) eingebracht werden, der Länge l der später durch Schneiden quer zur Transportrichtung entstehenden Gipsplatten plus einen Schneid- und Nachbehandlungsverlust an den Stirnkanten d entspricht, insbesondere die Gipslage (16) später im Bereich der Einformungen (18) oder Einprägungen (19) zur Konfektionierung von Gipsplatten mit Länge l geschnitten wird.

14. Verfahren nach einem der Ansprüche 12 bis 13, **dadurch gekennzeichnet, dass** eine Synchronisierung zwischen den Einformungen (18) oder Einprägungen (19) quer zur Transportrichtung und den zuvor vorgenommenen Mengenreduzierungen gewährleistet wird, insbesondere dadurch, dass der Abstand der Einformungen (18) oder Einprägungen (19) in der Gipslage (16) vorgegeben ist und die eventuell aus der Phase geratende Frequenz f der Mengenreduzierung in der Gipsslurry (13) nachjustiert wird.

15. Verfahren nach einem der Ansprüche 12 bis 14, **dadurch gekennzeichnet, dass** die Einformungen (18) über Formstege (20), die über eine vorgegebene Abbindezeit mit der Gipslage (16) auf der Förderbandvorrichtung (10) mitlaufen, erzielt werden.

16. Verfahren nach einem der Ansprüche 12 bis 14, **dadurch gekennzeichnet, dass** die Einprägungen (19) über eine bezogen auf die Förderbandvorrichtung (10) insbesondere stationär angeordnete Prägeeinrichtung (31), insbesondere über eine Prägerolle (21), erzielt werden.

## Claims

1. A plaster-board production installation, comprising
- a conveyor belt device (10) having a supporting belt (11),
- a first feed (24) for a first sheathing (12) such that the first sheathing (12) is guided onto the supporting belt (11),
- a plaster feed (22) which feeds a plaster slurry (13) from a mixer (23) onto the first sheathing (12), in order to form in this way a plaster coat (14) on the first sheathing (12),
- a second feed (25) for a second sheathing (15) such that the second sheathing (15) is applied onto the plaster coat (14) and a plaster layer (16) comprising the first sheathing (12), the plaster coat (14) and the second sheathing (15) is formed,
- a leveling device such as, for example, a leveling bar (17) or a leveling roller, in order to level the plaster layer (16), as well as
- a metering device (26) which is designed and set up to reduce the amount V(t) of the plaster slurry (13) introduced between the first sheathing (12) and the second sheathing (15) at a predefined clock frequency f over a predefined time period t_{Δ} in comparison with a target amount Vᵥ,
wherein the metering device is arranged in the region of a molding table (28), in particular is integrated within the molding table (28) on which the plaster layer (16) is formed and molded by bringing together the first sheathing (12), the plaster slurry (13) and the second sheathing (15),
**characterized in that**
the metering device (26) comprises a accumulation blade (29) or accumulation roller, which is aligned transversely to the transporting direction of the conveyor belt device (10) and is designed to be movable toward the plaster coat (14) with a predefined stroke h in a direction orthogonal to the transporting direction and to the longitudinal alignment of the accumulation blade (29) or accumulation roller.

2. The plaster-board production installation according to claim 1, **characterized in that** the metering device (26) interacts with a control device (27), which predefines and possibly adjusts the clock frequency f.

3. The plaster-board production installation according to claim 1 or 2, **characterized in that** the accumulation blade (29) or the accumulation roller acts with a respectively predefined stroke h on the plaster layer from above and brings about a reduction in the amount of the plaster coat (14) in the plaster layer (16) by being lowered over a predefined time period.

4. The plaster-board production installation according to claim 1 or 2, **characterized in that** the accumulation blade (29) or the accumulation roller acts with a respectively predefined stroke h on the plaster layer from below and brings about a reduction in the amount of the plaster coat (14) in the plaster layer (16) by being raised over a predefined time period.

5. The plaster-board production installation according to anyone of claims 1 to 4, **characterized in that** the stroke h of the accumulation blade or the accumulation roller is set to a maximum stroke, which is fixed to a value in the range from 0.5 mm to 5 mm, preferably 1 to 3 mm.

6. The plaster-board production installation according to anyone of claims 1 to 5, **characterized in that** an indenting device (30) is provided, which acts upon the plaster layer (16) downstream of the metering device (26) in the transporting direction of the conveyor belt device (10) and creates indentations (18) that are aligned transversely to the transporting direction of the conveyor belt device in the region of the locations at which the metering device has brought about a reduction in the amount of plaster slurry (13).

7. The plaster-board production installation according to anyone of claims 1 to 6, **characterized in that** an impressing device (31) is provided, which also acts upon the plaster layer (16) at a distance from the metering device (26) in the transporting direction of the conveyor belt device (10) and creates imprintings (19) in the region of the locations at which the metering device has brought about a reduction in the amount of plaster slurry (13).

8. The plaster-board production installation according to claim 7, **characterized in that** the impressing device (31) comprises an impressing roller or a movable impressing stamp.

9. The plaster-board production installation according to anyone of claims 6 to 8, **characterized in that** the frequency of the indentations (18) or the imprintings (19) is synchronized with the control device (27) of the metering device (26) by way of a central control (32) and/or by way of sensors (33).

10. A method for producing a plaster board comprising the steps of
- providing a conveyor belt device (10) having a supporting belt (11),
- applying a first sheathing (12) onto the supporting belt (11),
- applying a plaster slurry (13) onto the first sheathing (12) while forming a plaster coat (14), as well as
- applying a second sheathing (15) to the applied plaster slurry (13) for forming a plaster layer (16) comprising he first sheathing (12), the plaster coat (14) and the second sheathing (15),
- leveling the plaster layer (16) with a leveling bar (17) or a leveling roller,
**characterized in that**
the amount V(t) of the plaster slurry (13) introduced between the first sheathing (12) and the second sheathing (15) is reduced at a predefined clock frequency f over a predefined time period t_{Δ} in comparison with a target amount Vᵥ, wherein the reduction of the introduced plaster slurry is performed by accumulating the plaster slurry introduced between the first sheathing (12) and the second sheathing (15) by means of a accumulation blade or accumulation roller while displacing the accumulation blade or accumulation roller in a direction orthogonal to the transporting direction and to the longitudinal alignment of the accumulation blade or accumulation roller toward the plaster coat (14) with a predefined stroke (h).

11. The method according to claim 10, **characterized in that** the time period tΔ of reducing the amount is less than 20%, in particular between 10% and about 5%, of the period defined by the clock frequency f.

12. The method for producing a plaster board according to claim 10 or 11, **characterized in that** indentations (18) or imprintings (19) formed transversely to the transporting direction are introduced at a predefined spacing a into the plaster layer (16) before hardening or after hardening has already begun, the clock frequency f being predefined or set such that the reduction in the amount of plaster slurry delivered is provided at the locations of the plaster layer (16) at which the indentations (18) or imprintings (19) are subsequently formed.

13. The method according to claim 12, **characterized in that** the predefined spacing a at which the indentations (18) or imprintings (19) are introduced corresponds to the length l of the plaster boards later created by cutting transversely in relation to the transporting direction, plus a loss for cutting and subsequent treatment at the end edges d, in particular the plaster layer (16) is cut later on in the regions of the indentations (18) or imprintings (19) for making plaster boards with a length l.

14. The method according to anyone of claims 12 to 13, **characterized in that** a synchronization between the indentations (18) or imprintings (19) transversely in relation to the transporting direction and the preceding reductions in amount is ensured, in particular by the spacing of the indentations (18) or imprintings (19) in the plaster layer (16) being predefined and the frequency f of the reduction in amount in the plaster slurry (13) that may get out of phase being adjusted.

15. The method according to anyone of claims 12 to 14, **characterized in that** the indentations (18) are achieved by way of molding bars (20) that run along with the plaster layer (16) on the conveyor belt device (10) over a predefined setting time.

16. The method according to anyone of claims 12 to 14, **characterized in that** the indentations (19) are achieved by way of an impressing device (31), in particular by way of an impressing roller (21), which is arranged in particular stationarily with respect to the conveyor belt device (10).

## Revendications

1. Installation de fabrication de plaques de plâtre, comprenant
- un dispositif convoyeur à bande (10) comportant une bande porteuse (11),
- une première alimentation (24) pour une première enveloppe (12) de telle façon que la première enveloppe (12) soit guidée sur la bande porteuse (11),
- une alimentation en plâtre (22) qui achemine une pâte de plâtre (13) provenant d'un mélangeur (23) sur la première enveloppe (12) pour constituer ainsi une couche de plâtre (14) sur la première enveloppe (12),
- une deuxième alimentation (25) pour une deuxième enveloppe (15) de telle façon que la deuxième enveloppe (15) soit appliquée sur la couche de plâtre (14) et qu'une nappe de plâtre (16) comprenant la première enveloppe (12), la couche de plâtre (14) et la deuxième enveloppe (15) soit constituée,
- un dispositif de lissage, comme par exemple une poutre de lissage (17) ou un rouleau de lissage, pour lisser la nappe de plâtre (16), ainsi que
- un dispositif de dosage (26) qui est constitué et configuré pour réduire la quantité V(t) de la pâte de plâtre (13) introduite entre la première enveloppe (12) et la deuxième enveloppe (15) à une fréquence de cadence f spécifiée pendant un laps de temps t_{Δ} spécifié par rapport à une quantité de spécification V_{V},
sachant que le dispositif de dosage est disposé dans la zone d'une table de formage (28), en particulier intégré à l'intérieur de la table de formage (28), au niveau de laquelle la nappe de plâtre (16) est constituée et formée par assemblage de la première enveloppe (12), de la pâte de plâtre (13) et de la deuxième enveloppe (15),
**caractérisée en ce que**
le dispositif de dosage (26) comprend une lame d'accumulation (29) ou un rouleau d'accumulation orienté/e transversalement à la direction de transport du dispositif convoyeur à bande (10), lequel/laquelle est constitué/e de façon mobile dans une direction perpendiculaire à la direction de transport et à l'orientation longitudinale de la lame d'accumulation (29) ou du rouleau d'accumulation vers la couche de plâtre (14) selon une course h spécifiée.

2. Installation de fabrication de plaques de plâtre selon la revendication 1, **caractérisée en ce que** le dispositif de dosage (26) interagit avec un dispositif de commande (27) qui spécifie, et le cas échéant réajuste, la fréquence de cadence f.

3. Installation de fabrication de plaques de plâtre selon la revendication 1 ou 2, **caractérisée en ce que** la lame d'accumulation (29) ou le rouleau d'accumulation agit du haut sur la nappe de plâtre selon une course h respectivement spécifiée et provoque une réduction de la quantité de la couche de plâtre (14) dans la nappe de plâtre (16) par abaissement pendant un laps de temps spécifié.

4. Installation de fabrication de plaques de plâtre selon la revendication 1 ou 2, **caractérisée en ce que** la lame d'accumulation (29) ou le rouleau d'accumulation agit du bas sur la nappe de plâtre selon une course h respectivement spécifiée et provoque une réduction de la quantité de la couche de plâtre (14) dans la nappe de plâtre (16) par relèvement pendant un laps de temps spécifié.

5. Installation de fabrication de plaques de plâtre selon l'une des revendications 1 à 4, **caractérisée en ce que** la course h de la lame d'accumulation ou du rouleau d'accumulation est réglée à une course maximale qui est définie à une valeur comprise dans la plage de 0,5 mm à 5 mm, de préférence de 1 à 3 mm.

6. Installation de fabrication de plaques de plâtre selon l'une des revendications 1 à 5, **caractérisée en ce qu'**un dispositif de formation en creux (30) est prévu, lequel agit sur la nappe de plâtre (16) en direction de transport du dispositif convoyeur à bande (10) en aval du dispositif de dosage et génère des formations en creux (18) orientées transversalement à la direction de transport du dispositif convoyeur à bande dans la zone des endroits où le dispositif de dosage a provoqué une réduction de quantité de la pâte de plâtre (13).

7. Installation de fabrication de plaques de plâtre selon l'une des revendications 1 à 6, **caractérisée en ce qu'**un dispositif d'estampage (31) est prévu, lequel agit sur la nappe de plâtre (16) en direction de transport du dispositif convoyeur à bande (10) à distance du dispositif de dosage (26) et génère des estampages (19) dans la zone des endroits où le dispositif de dosage a provoqué une réduction de quantité de la pâte de plâtre (13).

8. Installation de fabrication de plaques de plâtre selon la revendication 7, **caractérisée en ce que** le dispositif d'estampage (31) comprend un rouleau d'estampage ou un poinçon d'estampage mobile.

9. Installation de fabrication de plaques de plâtre selon l'une des revendications 6 à 8, **caractérisée en ce que** la fréquence des formations en creux (18) ou des estampages (19) est synchronisée avec le dispositif de commande (27) du dispositif de dosage (26) via une commande centrale (32) et/ou via des capteurs (33).

10. Procédé de fabrication d'une plaque de plâtre comprenant les étapes suivantes :
- mise à disposition d'un dispositif convoyeur à bande (10) comportant une bande porteuse (11),
- application d'une première enveloppe (12) sur la bande porteuse (11),
- application d'une pâte de plâtre (13) sur la première enveloppe (12) en constituant une couche de plâtre (14) ainsi que
- application d'une deuxième enveloppe (15) sur la pâte de plâtre (13) appliquée pour constituer une nappe de plâtre (16) comprenant la première enveloppe (12), la couche de plâtre (14) et la deuxième enveloppe (15),
- lissage de la nappe de plâtre (16) avec une poutre de lissage (17) ou un rouleau de lissage,
**caractérisé en ce que**
la quantité V(t) de la pâte de plâtre (13) introduite entre la première enveloppe (12) et la deuxième enveloppe (15) est réduite à une fréquence de cadence f spécifiée pendant un laps de temps t_{Δ} spécifié par rapport à une quantité de spécification V_{V}, sachant que la réduction de la pâte de plâtre introduite s'effectue via un engorgement de la pâte de plâtre introduite entre la première enveloppe (12) et la deuxième enveloppe (15) au moyen d'une lame d'accumulation ou d'un rouleau d'accumulation en déplaçant la lame d'accumulation ou le rouleau d'accumulation dans une direction perpendiculaire à la direction de transport et à l'orientation longitudinale de la lame d'accumulation ou du rouleau d'accumulation vers la couche de plâtre (14) selon une course (h) spécifiée.

11. Procédé selon la revendication 10, **caractérisé en ce que** le laps de temps t_{Δ} de la réduction de quantité est de moins de 20 %, en particulier entre 10 % et environ 5 %, de la période spécifiée par la fréquence de cadence f.

12. Procédé de fabrication d'une plaque de plâtre selon la revendication 10 ou 11, **caractérisé en ce que** des formations en creux (18) ou des estampages (19) formés transversalement à la direction de transport sont introduits dans la nappe de plâtre (16) avant durcissement ou après durcissement déjà commencé à un écartement a spécifié, sachant que la fréquence de cadence f est spécifiée ou réglée de telle façon que la réduction de quantité de la pâte de plâtre délivrée soit donnée aux endroits dans la nappe de plâtre (16) où les formations en creux (18) ou estampages (19) sont réalisés consécutivement.

13. Procédé selon la revendication 12, **caractérisé en ce que** l'écartement a spécifié auquel les formations en creux (18) ou estampages (19) sont introduits correspond à la longueur l des plaques de plâtre générées ultérieurement par coupe transversale à la direction de transport plus une perte de coupe et de traitement ultérieur aux chants d, en particulier la nappe de plâtre (16) est coupée ultérieurement dans la zone des formations en creux (18) ou des estampages (19) pour la confection de plaques de plâtre de longueur l.

14. Procédé selon l'une des revendications 12 à 13, **caractérisé en ce qu'**une synchronisation entre les formations en creux (18) ou les estampages (19) transversalement à la direction de transport et les réductions de quantité effectuées auparavant est garantie, en particulier par le fait que l'écartement des formations en creux (18) ou des estampages (19) dans la nappe de plâtre (16) est spécifié et la fréquence f de la réduction de quantité de la pâte de plâtre (13) qui dévie éventuellement de la phase est réajustée.

15. Procédé selon l'une des revendications 12 à 14, **caractérisé en ce que** les formations en creux (18) sont réalisées via des entretoises de formage (20) qui avancent avec la nappe de plâtre (16) sur le dispositif convoyeur à bande (10) pendant un temps de liage spécifié.

16. Procédé selon l'une des revendications 12 à 14, **caractérisé en ce que** les estampages (19) sont réalisés via un dispositif d'estampage (31) disposé en particulier de façon stationnaire par rapport au dispositif convoyeur à bande (10), en particulier via un rouleau d'estampage (21).
